# EUROPÄISCHE PATENTSCHRIFT

(11) **EP 3 877 582 B1**
(45) Veröffentlichungstag und Bekanntmachung des Hinweises auf die Patenterteilung: **19.07.2023**
(21) Anmeldenummer: 19786963.9
(22) Anmeldetag: 11.10.2019
(51) Int. Cl.: C25B 3/23, C25B 11/02, D06F 39/02, D06F 35/00

(54) **VORRICHTUNG ZUR AKTIVIERUNG EINER MEDIATORSPEZIES**
DEVICE FOR ACTIVATING A MEDIATOR SPECIES
DISPOSITIF D'ACTIVATION D'UNE ESPÈCE MÉDIATRICE

(30) Priorität: 06.11.2018 DE 102018218878
(43) Veröffentlichungstag der Anmeldung: 15.09.2021
(73) Patentinhaber: Henkel AG & Co. KGaA, 40589 Düsseldorf (DE)
(72) Erfinder: TORUN, Boray, 40589 Düsseldorf (DE); SCHMIEDEL, Peter, 40591 Düsseldorf (DE); CIUPKA, Robert, 40764 Langenfeld (DE); TREU, Sandra, 40589 Düsseldorf (DE); KINSCHECK, Isabel, 42781 Haan (DE); MUTHUKRISHNAN, Komalshree, 40597 Düsseldorf (DE)
(86) Internationale Anmeldenummer: PCT/EP2019/077632
(87) Internationale Veröffentlichungsnummer: WO 2020/094331

(56) Entgegenhaltungen:
- DE-A1-102008 035 910
- DE-A1-102014 220 623
- JP-A- 2004 298 754

## Beschreibung

Die vorliegende Erfindung betrifft eine Vorrichtung zur Aktivierung einer Mediatorspezies in eine bleichaktive Spezies mittels Elektrolyse, umfassend eine Spannungsquelle sowie eine mit der Spannungsquelle verbundene Anode und eine mit der Spannungsquelle verbundene Kathode.

Mit Mediatorspezies ist in diesem Zusammenhang eine Substanz gemeint, die im aktivierten oder oxidierten Zustand bleichaktiv ist. Sie wird auch bleichaktive Spezies genannt.

### Hintergrund

Die Erfindung betrifft das Gebiet der Waschmaschinentechnik, insbesondere in Bereich der Haushaltswaschmaschinen. Vorrangig steht sie im Zusammenhang mit dem allgemein bekannten Problem, dass viele alltagsrelevante Verschmutzungen beim Einsatz von flüssigem Waschmittel nur unzureichend entfernt werden. Zu der Gruppe dieser Verschmutzungen gehören beispielsweise anthocyanhaltige Farbstoffe oder Farbstoffe der Gruppe der Carrotinoide.

Hintergrund dieser Problematik ist, dass die Entfernung bestimmter Flecken im Wesentlichen auf einer Oxidationsreaktion eines Chromophors beruht. Durch die Oxidation eines delokalisierten π-Elektronensystems verliert der Farbstoff die Eigenschaft, Licht im visuellen Spektralbereich zu absorbieren und erscheint farblos. Darüber hinaus kann es in einigen Fällen auch zu einer Abbaureaktion des Farbstoffes in kleinere und besser wasserlösliche Spezies kommen. Allerdings benötigen typischerweise in festen Waschmitteln eingesetzte Bleichsysteme (beispielsweise TAED + Natriumpercarbonat) vergleichsweise hohe Temperaturen, um ihre volle Wirkung zu entfalten. Auch wird die Entwicklung eines flüssigen Waschmittels für die Anwendung in Haushalten mit einer potenten Bleichwirkung durch die Inkompatibilität der Bleiche insbesondere mit den im Waschmittel enthaltenen Enzymen erschwert.

Im Stand der Technik ist bekannt, dass eine elektrochemisch mediierte Bleichreaktion beide Probleme (hohe Temperatur, Inkompatibilität im Flüssigprodukt) lösen kann. Das Prinzip dieses Bleichprozesses kann in der Übertragung einer Oxidationsreaktion an einer Anodenoberfläche einer elektrochemischen Zelle hin zum zu bleichenden Textil gesehen werden. Dabei wird mutmaßlich ein zunächst in reduzierter Form vorliegendes Mediatormolekül an der Anode der elektrochemischen Zelle oxidiert. Diese oxidierte, oder aktivierte, Mediatorspezies kann seinerseits ein Farbstoffmolekül oxidieren, ist also bleichaktiv, und wird dabei selber in die reduzierte Spezies zurückgeführt, welches für eine erneute Oxidation (Aktivierung) zur Verfügung steht. Auf diese Weise kann ermöglicht werden, mit einer vergleichsweise geringen Menge an Mediator einen Bleicheffekt zu erzeugen, da im Gegensatz zu einem traditionellen System keine dem zu bleichendem Substrat stöchiometrische Einsatzmenge gewählt werden muss. Zusätzlich vermag das Mediatormolekül nur in Verbindung mit einer elektrochemischen Zelle Substrate zu oxidieren.

Aus diesem Grund ist keine ungewollte Reaktion an im Waschmittel enthaltenen und oxidationsempfindlichen Bestandteilen, wie beispielsweise den Enzymen, zu erwarten. Darüber hinaus bedarf es, verglichen zu einem traditionellen Bleichesystem wie TAED + Natriumpercarbonat, keiner erhöhten Waschtemperatur, um den elektrochemischen Prozess ablaufen zu lassen.

Die EP3134500A1 offenbart die Verwendung bestimmter organischer Mediatorverbindungen zur Verstärkung der Reinigungsleistung von Wasch- und Reinigungsmitteln gegenüber Anschmutzungen, Wasch- beziehungsweise Reinigungsverfahren unter Einsatz aus solchen Mediatorverbindungen erzeugter bleichaktiver Spezies sowie Wasch- und Reinigungsmittel, welche die Mediatorverbindung enthalten.

Die DE102014220623A1 offenbart eine Vorrichtung zur Aktivierung einer Mediatorspezies mittels Elektrolyse, umfassend eine Spannungsquelle sowie eine mit der Spannungsquelle verbundene Anode und eine mit der Spannungsquelle verbundene Kathode.

Es ist daher die Aufgabe der vorliegenden Erfindung, eine Vorrichtung zur Verfügung zu stellen, welche die Aktivierung einer Mediatorspezies in eine bleichaktive Form ermöglicht.

### Beschreibung der Erfindung

Die Aufgabe wird gelöst durch eine Vorrichtung gemäß Anspruch 1 sowie durch eine Verwendung nach Anspruch 16 und ein Verfahren nach Anspruch 17. Die rückbezogenen Unteransprüche geben vorteilhafte Weiterbildungen der Erfindung wieder.

Durch die Erfindung wird insbesondere die Realisierung eines elektrochemischen Waschprozesses ermöglicht, der mit handelsüblichen Waschmaschinen kompatibel ist. Insbesondere werden im Kontext der geräteseitigen Implementierung mehrere wesentliche Probleme gelöst: Die erfindungsgemäße Vorrichtung ist aufgrund der Spannungseinheit als autarkes System mit allen handelsüblichen Waschmaschinen kompatibel, da keine gesonderte Schnittstelle vorgesehen sein muss. Außerdem ist die Vorrichtung aufgrund der isolierenden Hülle gegen elektrische - in Form eines Kurzschlusses - und gleichzeitig mechanische Einwirkung der Wäschetrommel geschützt und daher zerstörungsfrei, also insbesondere mehrfach, einsetzbar. Gleichzeitig wird dennoch ein ausreichender Kontakt zwischen den wirksamen Oberflächen der Elektroden und der, mit dem elektrochemischen Mediator ausgestatteten, Waschflotte gewährleistet. Vorzugsweise ist also der Aufbau der Hülle so gewählt, dass beide Elektroden keinen direkten (Anode berührt Kathode) oder indirekten (Anode und / oder Kathode berühren ein elektrisch leitfähiges Objekt im inneren der Waschmaschine) elektrischen Kontakt oder Kurzschluss aufbauen können.

Da die Vorrichtung eine eigenständige Spannungsquelle, also Stromversorgung, trägt, ist sie autark funktionsfähig und somit kompatibel mit handelsüblichen Waschmaschinen. Darüber hinaus bedarf es zur vorgesehen Verwendung keiner Anpassung oder sonstigen Modifikation der Waschmaschine.

Ferner ist es mittels der verformbaren Hülle möglich, ein Gerät zu erstellen, welches eine kissenartige Geometrie aufweist. Dadurch ist die Vorrichtung leicht zu greifen und handzuhaben. Ebenfalls ist eine kissenartige Ästhetik oder Optik dem Konsumenten aus dem Alltag insbesondere im Kontext mit Wäsche vertraut und sorgt so für eine niedrige Hemmschwelle bezüglich der Anwendung.

### Spannungsquelle

Die Spannungsquelle weist einen Energiespeicher, beispielsweise eine Batterie, auf, und dient der Beaufschlagung der Anode und Kathode mit dem für die elektrochemische Reaktion nötigen Potential. Dabei beträgt der Betrag der Potentialdifferenz zwischen den Elektroden bis zu 10V oder 5V, bevorzugt 0,5 bis 4,5V, ganz bevorzugt 1,5 bis 3,5V. Die Polarisation kann dabei frei wählbar sein. Die Spannungsquelle ist dabei vorzugsweise so ausgebildet, dass sie die für das gewählte Potential nötige Stromstärke zur Verfügung stellen kann. Der Energiespeicher kann wiederaufladbar sein, wobei das Aufladen des Energiespeichers beispielsweise durch folgende Methoden erfolgen kann: Entnehmen des Energiespeichers, beispielsweise einer Batterie, aus der Spannungsversorgung und aufladen in einem separaten externen Gerät, oder Anschluss der Vorrichtung oder der Spannungsversorgung an ein externes Ladegerät. Bei allen Methoden kann das Aufladen beispielsweise kabelgebunden oder über beispielsweise über induktive Leistungsübertragung realisiert werden. Weitere dem Fachmann bekannte Ladetechniken sind ebenfalls denkbar. Die Spannungsquelle kann einen Regler aufweisen, über den beispielsweise die Spannung, beispielsweise einmalig oder auch beispielsweise in Abhängigkeit von Parametern, welche beispielsweise in einer Speichereinheit hinterlegt, durch Sensoren ermitteln oder durch eine Kommunikationseinheit empfangen werden können, geregelt wird.

### Anode

Die Aktivierung des Mediators geschieht durch eine Oxidation an der Anodenoberfläche. Mögliche Ausführungsformen für die Anode sind beispielsweise
- flächige Formen wie z.B. Bleche,
- Formkörper basierend auf einer zerspanenden oder nicht zerspanenden Formgebung,
- Dünnschichten, die beispielsweise durch Verdampfung oder Plasmaabscheidung auf ein Substrat aufgebracht werden,
- wollige oder wollförmige Strukturen,
- schwammartige Strukturen, oder
- Elektroden textiler Natur wie gewebte oder nichtgewebte Gewirke.

Ein wesentlicher Anspruch an die Auswahl des Materials besteht in einer für den Prozess hinreichenden elektrischen Leitfähigkeit innerhalb des Materials sowie einer möglichst großen effektiven Fläche, also Austauschfläche mit der Waschlösung. Bevorzugt ist also eine Anode mit einem hohen Quotienten von wirksamer Oberfläche zu Volumen beziehungsweise Bauvolumen. Zwecks Vergrößerung der Austauschfläche mit der Waschlösung können bekannte Methoden zur Oberflächenbehandlung (beispielsweise Aufrauen, Schleifen, Ätzen oder Beizen) eingesetzt werden. Auch das Herstellen einer Anode über Sintern ist denkbar.

### Kathode

Die Kathode kann ein zu der Anode identisches oder von ihr unterschiedliches Material umfassen oder daraus bestehen. Die Größe, das Volumen, die Fläche der Oberfläche und die Masse der Kathode kann von dem jeweiligen Wert der Anode abweichen oder identisch sein. Die wesentliche Aufgabe der Kathode liegt in der ausreichenden Zurverfügungstellung einer Gegenreaktion der elektrochemischen Aktivierungsreaktion an der Anode. Bevorzugt ist die Kathode insbesondere hinsichtlich der geometrischen und mechanischen Eigenschaften im Wesentlichen ähnlich oder gleich ausgeführt wie die Anode. Die Kathode und Anode dürfen sich auch bei mechanischer Belastung -jedenfalls unterhalb einer mechanischen Beschädigung der Vorrichtung - nicht berühren, was beispielsweise durch deren Anordnung und Geometrie (beispielsweise als zwei Kissen an gegenüberliegenden Enden eines isolierenden Gehäuses der Spannungsversorgung) oder über die mindestens eine Hülle (beispielsweise je eine separate Hülle pro Elektrode, oder eine gemeinsame, in einem Zwischenbereich verengte Hülle) bewerkstelligt werden kann.

### Hülle

Die Hülle isoliert die Anode und die Kathode vor einem elektrischen Kurzschluss durch direkte Berührung voneinander und auch von äußeren Gegenständen. Zusätzlich dient sie zum mechanischen Schutz sowohl der Vorrichtung als auch der Waschmaschine inklusive deren Inhalt, und als Griffelement für einen Benutzer. Beispielsweise ist für Anode und Kathode eine Hülle vorgesehen, die zumindest auf der jeweiligen Außenseite ein nicht elektrisch leitfähiges Material aufweist, so dass bei äußerem mechanischen Kontakt kein elektrischer Kontakt entsteht. Vorzugsweise besteht die Hülle vollständig aus einem elektrisch nicht leitfähigem Material. Außerdem ist die Hülle für Flüssigkeiten, insbesondere für wasserreiche Lösungen, beispielsweise Waschlauge und die darin enthaltenen Stoffe wie beispielsweise eine Mediatorverbindung, durchlässig.

Die Hülle kann in mehrere Abschnitte oder Kompartimente unterteilt sein die jeweils einzelne Baugruppen der Vorrichtung, also beispielsweise Anode, Kathode, Spannungsquelle, getrennt voneinander einschließen. Die Hülle kann aus einem schwammartigen Material bestehen oder eine schwammartige Zwischenschicht enthalten, welche eine gewisse Menge an Waschlauge aufnehmen kann. Die Hülle kann eine vorzugsweise verschließbare - beispielsweise per Reißverschluss, Klettverschluss, Magnetverschluss oder Druckknopfverschluss - Öffnung aufweisen, zur Wartung oder zum kabelgebundenen Aufladen der für den Betrieb nötigen Spannungsversorgung. Die Hülle kann aus einer flüssigkeitsdurchlässigen Folie bestehen.

Die Hülle kann aus natürlichem oder synthetischem Material, beispielsweise ein Textil oder Plastik, umfassen oder daraus bestehen. Die Hülle kann aus Fasern aufgebaut sein, welche Fasern zu einem gewobenen oder nichtgewobenen Gewirk zusammengesetzt sein können.

Gemäß der Erfindung ist die Hülle verformbar. Mit verformbar ist gemeint, dass die Hülle durch eine Einwirkung einer mechanischen Kraft elastisch oder unelastisch, aber in jedem Fall zerstörungsfrei und reversibel, ihre Form an eine äußere Geometrie anpassen kann. Vorzugsweise reicht für eine Verformung der Hülle bereits eine Kraft aus, deren Betrag geringer als die Gewichtskraft der Hülle ist. Wenn die leere Hülle also auf einer Oberfläche aufliegt, nimmt sie zumindest teilweise deren Geometrie an. Dies bewirkt eine bessere Handhabung und eine bessere Beweglichkeit sowie eine Dämpfung von Stößen in der Waschtrommel, wodurch effektiv mechanische Schäden verhindert werden.

Weiter verbessert wird die Erfindung dadurch, dass die Hülle in Form eines, bevorzugt gewobenen, Netzes ausgebildet ist. Mit Netz ist gemeint, dass die Hülle aus Maschen aufgebaut ist, wobei die Freiräume der Maschen die Flüssigkeitsdurchlässigkeit und das Material der Maschen die elektrische Isolierung gegen einen Kurzschluss durch direkten Kontakt bewerkstelligen. Wenn die Hülle gewoben ist, kann sie Flüssigkeit aufgrund der Kapillarwirkung aufsaugen und bei Verformung, insbesondere Kompression, wieder abgeben, was den Durchsatz an Mediatorflüssigkeit erhöht.

Eine bevorzugte Ausführungsform der Erfindung sieht vor, dass die Hülle die gesamte Vorrichtung einschließt. Somit sind nicht nur die Elektroden vor Kurzschlüssen sondern auch die Spannungsversorgung oder deren Gehäuse vor mechanischer Einwirkung wie Stößen und Reibung geschützt.

Besonders bevorzugt weist die Spannungsquelle ein Gehäuse auf, an welchem die Hülle befestigt ist. Insbesondere wenn Kathode und Anode auf zwei gegenüberliegenden Seiten der Spannungsquelle angeordnet sind, ist somit gleichzeitig eine elektrische Isolierung zwischen den Elektroden gewährleistet. Die Befestigung kann dabei lösbar sein, beispielsweise durch Formschluss oder durch ein Befestigungselement wie einen Knopf, oder unlösbar, beispielsweise geklebt. Alternativ oder zusätzlich kann die Hülle auch an einer oder beiden Elektroden befestigt sein.

Ganz besonders bevorzugt ist mindestens die Hälfte, vorzugsweise mindestens 90% der Fläche der wirksamen Oberfläche der Anode durch die Anode eingeschlossen. Dies ist gleichbedeutend damit, dass sich der Großteil der wirksamen Oberfläche der Anode in ihrem Inneren befindet. Dadurch ist es möglich, eine bezogen auf das Volumen kompakte Anode mit einer großen wirksamen Oberfläche bereitzustellen. Gerade in einer Waschmaschine, in der der sowohl das zur Verfügung stehende Volumen als auch die Menge an Mediatormaterial begrenzt ist, wird dadurch die Effektivität der Vorrichtung verbessert.

Eine bevorzugte Variante sieht vor, dass die Anode eine Vielzahl von Kanälen aufweist. Mit Kanälen sind Passagen oder Tunnel gemeint, die von einem Punkt auf einer Außenfläche der Anode durch das Innere zu einem anderen Punkt auf der Außenfläche auf der Anode führen. Diese Kanäle können beliebig verästelt oder gegabelt sein. Dadurch wird gleichzeitig eine hohe Fläche der Oberfläche der Anode bereitgestellt und sichergestellt, dass diese Oberfläche überall galvanisch miteinander verbunden ist, also überall in der Anode im Wesentlichen das gleiche Potential anliegt.

Ganz besonders bevorzugt ist die Anode verformbar, bevorzugt mit veränderlichem Volumen, also so dass es entlang einer Achse zu Streckung und Stauchung kommen kann. Dadurch werden mehrere Vorteile erreicht. Durch die Anpassung der Form der Anode an äußere Geometrien werden Schäden sowohl der Anode als auch der Waschtrommel vermieden. Insbesondere wenn ein Großteil der wirksamen Fläche der Oberfläche der Anode innerhalb derselben angeordnet ist, wird außerdem durch eine Verformung der Anode eine Pumpwirkung bewerkstelligt, da mit einer Verformung der Anode auch eine Verformung und Volumenänderung der Zwischenräume zwischen der Oberfläche einhergeht. Wird beispielsweise die Anode gestaucht, so wird Flüssigkeit aus ihrem Inneren herausgedrängt, wobei diese Flüssigkeit bereits zumindest teilweise mit der Anode in Kontakt gekommen sein konnte, also tendenziell oxidierte oder aktivierte Mediatoren beinhaltet. Wird die Anode gestreckt, so wird Flüssigkeit in das Innere aufgesogen, wo reduzierte Mediatoren dann aktiviert werden können. Es wird also durch die Verformbarkeit die Konvektion durch die Anode verbessert.

Weiter verbessert wird die Erfindung dann dadurch, dass die Anode elastisch verformbar ist. Dadurch wird verhindert, dass die Anode sich nur komprimiert, was insbesondere in einer Waschtrommel aufgrund der Zentrifugalkräfte und Stoßkräfte durch die Wände der Trommel und deren Inhalt gegebenenfalls möglich sein könnte.

Weiter bevorzugt ist, dass im Wesentlichen jede erste Stelle der Oberfläche der Anode entweder freiliegt oder an einer zweiten Stelle der Oberfläche der Anode anliegt, welche zweite Stelle relativ zur ersten Stelle beweglich ist. Dadurch kommt es insbesondere bei einer verformbaren Anode dazu, dass die Anode in ihrem Inneren bei Verformung an sich reibt, was ebenfalls die Konvektion und den Durchsatz an Mediatoren über die Anodenfläche erhöht.

Ganz besonders bevorzugt ist die Anode aus einer Gruppe von Materialien gefertigt, welche Gruppe Stahlwolle, ein elektrisch leitfähiges Textil und Späne umfasst.

Bevorzugt wird sowohl für die Anode als auch die Kathode eine metallische wollartige Struktur als Elektrodenmaterial ausgewählt. Diese Wahl ergibt, durch das hohe Verhältnis von Oberfläche zu Volumen, eine besonders große Austauschfläche mit der Waschflotte bezogen auf die eingesetzte Masse an Material. Versuche zeigten, dass eine ideales Oberfläche/Volumen Verhältnis zwischen 2,5 × 10³ m²/m³ und 2,5 × 10⁷ m²/m³ liegt, bevorzugt zwischen 2,5 × 10⁴ m²/m³ und 2,5 × 10⁶m²/m³ ganz besonders bevorzugt zwischen 2,5 × 10⁵ m²/m³ und 4 × 10⁵ m²/m³. In diesem Kontext ist unter Oberfläche die makroskopische Oberfläche unter Vernachlässigung von Oberflächenstrukturen wie beispielsweise Rauigkeit zu verstehen. Diese Materialwahl ermöglich es, die eingesetzte Materialmenge soweit zu optimieren, dass es in einer Schleuderphase eines Waschvorgangs zu keinen nennenswerten Unwuchten kommt.

Ebenfalls wurde herausgefunden, dass sich ein flexibles wollartiges Elektrodenmaterial überraschenderweise überproportional auf die Effizienz des erfindungsgemäßen Geräts auswirkt. Ohne an eine Theorie gebunden zu sein, lässt sich diese Beobachtung erklären durch ein kontinuierlichen "Walken" der flexiblen Anode während eines Waschgangs. Dadurch kommt es zu einem erzwungenen und wiederkehrenden Austausch von Waschlösung durch Kompressionsphasen (Waschflotte wird herausgedrückt) und Expansionsphasen (Waschflotte wird in die wollartigen Elektroden aufgenommen), wodurch zum einen aktivierte Mediatorspezies aus der Anode hinaus und desaktivierte Spezies in die Anode hineingelangt. Dadurch wird eine ausreichende Konvektion des aktivierten Mediators in die Waschflotte und des desaktivierten Mediators zur Anode sichergestellt.

Weiterhin besonders bevorzugt ist die Spannungsquelle in alle Raumrichtungen durch eine Polsterung vor Kontakt mit äußeren Ebenen geschützt. Unter einer Polsterung ist eine Einheit zur mechanischen Dämpfung gemeint, beispielsweise in Form eines Kissens. Insbesondere ist die Spannungsquelle in einem Gehäuse untergebracht, welches durch die Polsterung vor Stößen gegen die Waschtrommel geschützt wird. Durch eine geschickte Anordnung der übrigen internen Baugruppen ist es darüber hinaus möglich das Gerät so zu konzipieren, dass die Baugruppen mit hartem Gehäuse (beispielsweise die Spannungsversorgung) durch die flexiblen Baugruppen (beispielsweise die Hülle, die Anode und / oder Kathode) umhüllt und vor Stößen und Schlägen geschützt sind. Daraus ergibt sich sowohl eine besondere geringe akustische Belastung während der Anwendung als auch eine geringe mechanische Belastung der zu reinigenden Textilien.

Ganz besonders bevorzugt umfasst die Polsterung dabei die Anode, oder beide Elektroden, und die Hülle. Somit dient die Verformbarkeit und gegebenenfalls Elastizität der Anode, oder beider Elektroden, nicht nur der Optimierung der Aktivierung des Mediators, sondern auch gleichzeitig synergetisch dem mechanischen Schutz der Vorrichtung, insbesondere beispielsweise der Spannungsversorgung. Eine zusätzliche Polsterung ist dabei nicht ausgeschlossen, beispielsweise zwischen Hülle und Spannungsversorgung, beispielsweise in Form einer Textilschicht oder eines Schaums. Auch ist denkbar, dass Anode und / oder Kathode die Spannungsquelle vollständig einschließen.

Eine weiter Verbesserung der Erfindung sieht vor, dass die Vorrichtung einen Generator aufweist. Dieser vorzugsweise elektrische Generator soll geeignet sein, "energy harvesting" zu betreiben, also beispielsweise Bewegungsenergie aus der Rotationsbewegung der Waschtrommel und / oder von deren Inhalt entnimmt und in elektrische Energie umformt, zum Betrieb der Vorrichtung und / oder zum Aufladen des Energiespeichers. Beispielsweise kann der Generator die abzuführende Energie mittels eines Pendels, eines Schwungrands oder einer Turbine aufnehmen oder abgreifen.

Weiter bevorzugt weist die Vorrichtung einen Sensor zur Messung von Leitfähigkeit, Temperatur, Beschleunigung, pH-Wert oder Schall auf. Somit kann der Betrieb der Vorrichtung an den Betrieb der Waschmaschine gekoppelt werden. Es kann beispielsweise der Beginn und / oder das Ende und / oder charakteristische Ereignisse (beispielsweise eine Aufheizphase, ein Spülgang, eine Zugabe von Waschmittel) eines Waschzyklus erkannt werden. Besonders bevorzugt kann dann die Vorrichtung automatisch aktiviert und / oder deaktiviert und / oder gesteuert werden, beispielsweise durch Regelung der Spannung zwischen den Elektroden. Darüber hinaus kann die Vorrichtung mit Kommunikationsmitteln ausgestattet sein, die es ermöglichen, jederzeit Betriebsparameter oder Steuerinformationen oder Steuerbefehle der Waschmaschine oder einer anderen Kommunikationseinheit, wie eines Mobiltelefons, auszulesen und / oder zu beeinflussen. Dazu können verschiedene Kommunikationsmittel eingesetzt werden, zur Verwirklichung beispielsweise von optischer Kommunikation (beispielsweise Infrarot), akustischer Kommunikation, oder Kommunikation via Funk, wie beispielsweise WiFi, Bluetooth, ZigBee oder Z-Wave.

Ausführliche Tests einer erfindungsgemäßen Vorrichtung wurden in einer handelsüblichen Waschmaschine (Siemens 14T7G1) durchgeführt.

In einem Versuch V1 wurde die Waschmaschine dabei mit einer eingeschalteten erfindungsgemäßen Vorrichtung, einem Wäscheposten sowie Testflecken zur Bewertung der Reinigungswirkung auf bleichbare Anschmutzungen beaufschlagt. Anschließend wurde die Waschmaschine mit einer Waschlauge enthaltend unter anderem einen elektrochemischen Mediator gemäß EP 3134500 A1 befüllt und ein Waschprogramm gestartet. Nach abgeschlossenem Waschzyklus wurden die Testflecken entnommen, getrocknet und mittels eines fotospektroskopischen Verfahrens bewertet. Zwecks Quantifizierung der Reinigungswirkung wurde jeweils der ΔY Wert zwischen ungewaschenem Fleck und gewaschenem Fleck herangezogen.

Als Referenzexperiment R1 wurde ein abgewandelter Versuch unter Verwendung einer ausgeschalteten (Elektroden von der Spannungsquelle getrennt) erfindungsgemäßen Vorrichtung durchgeführt. Die Quantifizierung des Waschergebnisses erfolgte wie im Versuch V1.

| | ΔY Fleck 1 | ΔY Fleck 2 | ΔY Fleck 3 | ΔY Fleck 4 |
|---|---|---|---|---|
| V1 | 51,3 | 59,5 | 46,7 | 64,9 |
| R1 | 44,5 | 50,0 | 40,3 | 62,5 |

Es ist deutlich zu erkennen, dass die Waschleistung mit eingeschalteter erfindungsgemäßen Vorrichtung besser ausfällt als im korrespondierenden Referenzexperiment.

### Kurzbeschreibung der Figuren

Es zeigen
Figur 1 ein Schema einer erfindungsgemäßen Vorrichtung,
Figur 2 ein Schema eines weiteren Ausführungsbeispiels einer erfindungsgemäßen Vorrichtung,
Figur 3 ein Schema eines erfindungsgemäßen Verfahrens, und
Figur 4 ein Schema eines Kanals in verschiedenen Betriebszuständen.

### Beschreibung der Figuren

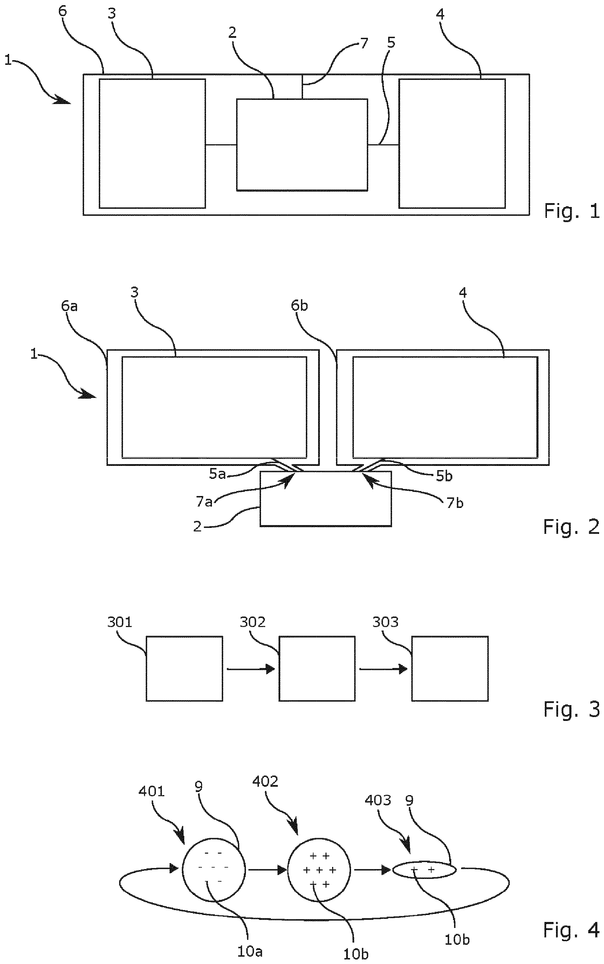

In Figur 1 zu sehen ist eine Vorrichtung 1 zur Aktivierung einer - hier nicht weiter dargestellten - Mediatorspezies zu einer bleichaktiven Spezies mittels Elektrolyse, umfassend eine Spannungsquelle 2 sowie eine mit der Spannungsquelle 2 verbundene Anode 3 und eine mit der Spannungsquelle 2 verbundene Kathode 4. Anode 3 und Kathode 4 sind jeweils mittels einer elektrischen Verbindung 5 mit der Spannungsquelle 2 verbunden.

Des Weiteren ist eine flüssigkeitsdurchlässige, elektrisch gegen Kurzschluss durch direkten Kontakt isolierenden Hülle 6 vorgesehen, in welcher die Anode 3 - und auch die Kathode 4 und die Spannungsquelle 2 - eingeschlossen ist. Die Hülle 6 ist mit einem Befestigungselements 7 an einem - hier nicht weiter dargestellten - Gehäuse der Spannungsquelle 2 befestigt und besteht aus einem Netz, welches aus einem elektrisch isolierenden Textil gewoben ist. Alternativ können auch andere elektrisch nicht leitfähige und gleichzeitig wasserdurchlässige und ionendurchlässige Materialen gewählt werden. Zur Gewährleistung der elektrischen Isolierung durch die Hülle 6 sind die Größe der Maschen und der Öffnungen des Netzes und die Dicke des Netzes sind dabei so gewählt, dass kein Teil der Elektroden 3, 4 durch die Hülle 6 hindurch ragen kann.

Sowohl Anode 3 als auch Kathode 4 bestehen aus Stahlwolle. Somit liegt der Großteil von deren wirksamen Oberflächen jeweils in deren Inneren. Mit dem Inneren ist der Bereich gemeint, der unterhalb einer konvexen Einhüllenden der Elektrode liegt. Insbesondere ist durch die Ausbildung der Elektroden aus Stahlwolle ebenfalls eine Vielzahl von Kanälen innerhalb jeder Elektrode verwirklicht. Dadurch ist eine besonders kompakte Bauweise erreicht.

Ebenfalls sind die Elektroden aufgrund der Ausbildung aus Stahlwolle elastisch verformbar. Wenn die Anode 3 also verformt wird, dann kommt es auch zu Verformungen der Kanäle und zu Änderungen von deren Innenvolumina, wodurch Flüssigkeitsaustausch oder Konvention begünstigt werden kann.

Wie im Schema angedeutet, sind Anode 3 und Kathode 4 seitlich an zwei gegenüberliegenden Seiten der Spannungsquelle angeordnet. Insbesondere aufgrund von deren Elastizität wirken Anode und Kathode also in beide seitlichen Raumrichtungen also als schützendes Polster. Da die beiden Elektroden außerdem - ebenfalls wie schematisch angedeutet - senkrecht zu der seitlichen Dimension höher und breiter ausgebildet sind als die Spannungsquelle 2, wirken die Elektroden in alle Raumrichtungen als schützenden Polster und verhindern somit, dass die Spannungsquelle mit einer Ebene - oder somit einer konkaven Oberfläche, wie der Innenwand einer Waschtrommel - in Berührung kommen kann.

Figur 2 zeigt ein weiteres Ausführungsbeispiel der Erfindung. Dieses unterscheidet sich von dem Beispiel der Figur 1 dadurch, dass Anode 3 und Kathode 4 jeweils durch eine eigene Hülle 6a beziehungsweise 6b eingeschlossen sind. Die Hüllen 6a, 6b bilden gleichzeitig eine Isolation der Leitungen 5a, 5b in Form jeweils eines - hier schematisch angedeuteten - Schlauchs, an deren Ende je ein Verbindungselement 7a, 7b zur lösbaren mechanischen und elektrischen Verbindung der jeweiligen Anode 3 beziehungsweise Kathode 4 mit der Spannungsquelle 2 vorgesehen ist. Dies kann beispielsweise die Wartung oder den Austausch einer Hülle und / oder der jeweiligen Elektrode vereinfachen.

Gemäß Figur 3 wird in einem ersten Schritt 301 eine Vorrichtung 1 gemäß Anspruch 1 in eine - hier nicht weiter dargestellte - Waschtrommel gelegt. In Schritt 302 wird die Waschflotte, also eine Flüssigkeit, welche eine Mediatorspezies enthält, in der Waschtrommel bereitgestellt, so dass die Vorrichtung und insbesondere die Anode 3 mit der Waschflotte in Berührung kommen. In einem Schritt 303 wird die Vorrichtung 1 betrieben, es wird also mittels der Spannungsquelle eine Spannung zwischen Kathode und Anode angelegt und so die Mediatorspezies in die bleichaktive Spezies überführt.

Figur 4 verdeutlicht das Wirkprinzip der Konvektion innerhalb einer Anode 3 insbesondere im Falle einer elastisch verformbaren Anode 3 am Beispiel eines schematisch dargestellten Kanals 9.

In einem ersten Betriebszustand 401 ist der Kanal 9 mit einer Flüssigkeit gefüllt, die Mediatormoleküle 10a enthält, die vorwiegend oder im Wesentlichen in reduzierter Form vorliegen. In einem anschließenden zweiten Betriebszustand 402 sind die Mediatormoleküle 10b aufgrund einer elektrochemischen Reaktion an der Wand des Kanals 9, also an der Oberfläche der Anode 3, oxidiert, also aktiviert. In einem dritten Betriebszustand 403 wird die Anode 3, also auch der Kanal 9, elastisch komprimiert, beispielsweise aufgrund eines Stoßes mit der Innenwand der Waschtrommel, so dass die aktivierten Mediatormoleküle 10b aus dem Kanal 9 - und aus der Anode 3 - herausbefördert werden. Daraufhin wird sich die Anode 3 wieder elastisch in ihren Grundzustand zurück verformen, so dass der Kanal 9 sein ursprüngliches Volumen zurückerhält und dabei Flüssigkeit - die aufgrund der Reaktion mit der zu bleichenden Wäsche vorwiegend oder im Wesentlichen reduzierte Mediatormoleküle 10a enthält - aufsaugt, wodurch wieder der erste Betriebszustand 401 verwirklicht ist. Somit wird die nichtlineare, und typischerweise hohen Beschleunigungen ausgesetzte, Bewegung der erfindungsgemäßen Vorrichtung in der Waschtrommel ausgenutzt, um die Anode effektiv als Pumpe wirken zu lassen.

Die Erfindung ist nicht beschränkt auf die vorstehend beschriebenen Ausführungsbeispiele. Es sind vielmehr auch Ausführungsformen mit umfasst, die unter die nachfolgenden Ansprüche fallen. So kann beispielsweise ein Reißverschluss vorgesehen sein, um eine Hülle zu öffnen. Auch kann die Spannungsquelle einen Generator aufweisen, beispielsweise ein Schwungrad.

### Bezugszeichenliste

- 1: Vorrichtung
- 2: Spannungsquelle
- 3: Anode
- 4: Kathode
- 5: Verbindung
- 6: Hülle
- 7: Verbindungselement
- 9: Kanal
- 10: Mediatormolekül
- 301-303: Verfahrensschritt
- 401-403: Betriebszustand

## Patentansprüche

1. Vorrichtung (1) zur Aktivierung einer Mediatorspezies mittels Elektrolyse, umfassend eine Spannungsquelle (2) sowie eine mit der Spannungsquelle (2) verbundene Anode (3) und eine mit der Spannungsquelle (2) verbundene Kathode (4),
**dadurch gekennzeichnet, dass** die Anode (3) in einer flüssigkeitsdurchlässigen, elektrisch nicht leitfähigen Hülle (6) eingeschlossen ist, wobei die Hülle (6) verformbar ist.

2. Vorrichtung (1) nach Anspruch 1, **dadurch gekennzeichnet, dass** die Hülle (6) in Form eines, bevorzugt gewobenen, Netzes ausgebildet ist.

3. Vorrichtung (1) nach einem der vorherigen Ansprüche, **dadurch gekennzeichnet, dass** die Hülle (6) die Kathode (4) und die Spannungsquelle (2) einschließt.

4. Vorrichtung (1) nach einem der vorherigen Ansprüche, **dadurch gekennzeichnet, dass** die Spannungsquelle (2) ein Gehäuse aufweist und die Hülle an dem Gehäuse befestigt ist.

5. Vorrichtung (1) nach einem der vorherigen Ansprüche, **dadurch gekennzeichnet, dass** mindestens die Hälfte, vorzugsweise mindestens75%, besonders bevorzugt mehr als 90% der Fläche der wirksamen Oberfläche der Anode (3) im Inneren der Anode (6) angeordnet ist.

6. Vorrichtung (1) nach einem der vorherigen Ansprüche, **dadurch gekennzeichnet, dass** die Anode (3) eine Vielzahl von Kanälen (9) aufweist.

7. Vorrichtung (1) nach einem der vorherigen Ansprüche, **dadurch gekennzeichnet, dass** die Anode (3) verformbar ist.

8. Vorrichtung (1) nach Anspruch 7, **dadurch gekennzeichnet, dass** die Anode (3) elastisch verformbar ist.

9. Vorrichtung (1) nach einem der vorherigen Ansprüche, **dadurch gekennzeichnet, dass** im Wesentlichen jede erste Stelle der Oberfläche der Anode (3) entweder freiliegt oder an einer zweiten Stelle der Oberfläche der Anode (3) anliegt, welche zweite Stelle relativ zur ersten Stelle beweglich ist.

10. Vorrichtung (1) nach einem der vorherigen Ansprüche, **dadurch gekennzeichnet, dass** die Anode (3) aus einem Material gefertigt ist, welches einer Gruppe zugeordnet ist, die Stahlwolle, elektrisch leitfähige Polymere, elektrisch leitfähige Textilien und Späne umfasst.

11. Vorrichtung (1) nach einem der vorherigen Ansprüche, **dadurch gekennzeichnet, dass** die Spannungsquelle (2) in alle Raumrichtungen durch eine Polsterung vor Kontakt mit äußeren Ebenen geschützt ist.

12. Vorrichtung (1) nach Anspruch 11, **dadurch gekennzeichnet, dass** die Polsterung die Anode (3) und die Hülle (6) umfasst.

13. Vorrichtung (1) nach einem der vorherigen Ansprüche, **dadurch gekennzeichnet, dass** sie einen Generator aufweist.

14. Vorrichtung (1) nach einem der vorherigen Ansprüche, **dadurch gekennzeichnet, dass** sie einen Sensor zur Messung von Leitfähigkeit, pH-Wert, Temperatur, Beschleunigung oder Schall aufweist.

15. Verwendung einer Vorrichtung (1) gemäß Anspruch 1 zur Aktivierung einer Mediatorspezies während eines Waschvorgangs in der Waschtrommel einer Waschmaschine.

16. Verfahren zur Aktivierung einer Mediatorspezies während des Betriebs einer Waschmaschine, umfassend
• Einlegen einer Vorrichtung (1) nach Anspruch 1 in eine Waschtrommel der Waschmaschine, so dass die Vorrichtung (1) während des Betriebs der Waschmaschine mit Waschflotte in Kontakt kommt,
• Bereitstellen der Mediatorspezies in der Waschflotte,
• Betreiben der Vorrichtung (1) und der Waschmaschine.

## Claims

1. A device (1) for activating a mediator species by means of electrolysis, comprising a voltage source (2) and an anode (3) connected to the voltage source (2) and a cathode (4) connected to the voltage source (2),
**characterized in that** the anode (3) is enclosed in a liquid-permeable, electrically non-conductive sheath (6), the sheath (6) being deformable.

2. The device (1) according to claim 1, **characterized in that** the sheath (6) is in the form of a preferably woven net.

3. The device (1) according to one of the preceding claims,
**characterized in that** the sheath (6) encloses the cathode (4) and the voltage source (2).

4. The device (1) according to one of the preceding claims,
**characterized in that** the voltage source (2) has a housing and the sheath is fastened to the housing.

5. The device (1) according to one of the preceding claims,
**characterized in that** at least half, preferably at least 75%, particularly preferably more than 90%, of the area of the effective surface of the anode (3) is arranged inside the anode (6).

6. The device (1) according to one of the preceding claims,
**characterized in that** the anode (3) has a plurality of channels (9).

7. The device (1) according to one of the preceding claims,
**characterized in that** the anode (3) is deformable.

8. The device (1) according to claim 7, **characterized in that** the anode (3) is elastically deformable.

9. The device (1) according to one of the preceding claims,
**characterized in that** substantially every first point on the surface of the anode (3) is either exposed or rests against a second point on the surface of the anode (3), which second point is movable relative to the first point.

10. The device (1) according to one of the preceding claims,
**characterized in that** the anode (3) is made of a material which is assigned to a group comprising steel wool, electrically conductive polymers, electrically conductive textiles and chips.

11. The device (1) according to one of the preceding claims,
**characterized in that** the voltage source (2) is protected from contact with external planes in all spatial directions by padding.

12. The device (1) according to claim 11, **characterized in that** the padding comprises the anode (3) and the sheath (6).

13. The device (1) according to one of the preceding claims,
**characterized in that** it comprises a generator.

14. The device (1) according to one of the preceding claims,
**characterized in that** it comprises a sensor for measuring conductivity, pH, temperature, acceleration or sound.

15. A use of a device (1) according to claim 1 for activating a mediator species during a washing process in the washing drum of a washing machine.

16. A method for activating a mediator species during operation of a washing machine, comprising
• inserting a device (1) according to claim 1 into a washing drum of the washing machine, such that the device (1) comes into contact with washing liquor during operation of the washing machine,
• providing the mediator species in the washing liquor,
• operating the device (1) and the washing machine.

## Revendications

1. Dispositif (1) permettant l'activation d'une espèce médiatrice au moyen d'une électrolyse, comprenant une source de tension (2) ainsi qu'une anode (3) reliée à la source de tension (2) et une cathode (4) reliée à la source de tension (2),
**caractérisé en ce que** l'anode (3) est enfermée dans une enveloppe (6) perméable aux liquides et électriquement non conductrice, l'enveloppe (6) étant déformable.

2. Dispositif (1) selon la revendication 1, **caractérisé en ce que** l'enveloppe (6) est réalisée sous la forme d'un filet, de préférence tissé.

3. Dispositif (1) selon l'une des revendications précédentes,
**caractérisé en ce que** l'enveloppe (6) renferme la cathode (4) et la source de tension (2).

4. Dispositif (1) selon l'une des revendications précédentes,
**caractérisé en ce que** la source de tension (2) présente un boîtier et l'enveloppe est fixée au boîtier.

5. Dispositif (1) selon l'une des revendications précédentes,
**caractérisé en ce qu'**au moins la moitié, de préférence au moins 75 %, de manière particulièrement préférée plus de 90 %, de la superficie de la surface active de l'anode (3) est disposée à l'intérieur de l'anode (6).

6. Dispositif (1) selon l'une des revendications précédentes,
**caractérisé en ce que** l'anode (3) présente une pluralité de canaux (9).

7. Dispositif (1) selon l'une des revendications précédentes,
**caractérisé en ce que** l'anode (3) est déformable.

8. Dispositif (1) selon la revendication 7, **caractérisé en ce que** l'anode (3) est déformable de manière élastique.

9. Dispositif (1) selon l'une des revendications précédentes,
**caractérisé en ce que** sensiblement chaque premier emplacement de la surface de l'anode (3) est soit exposé, soit en appui sur un second emplacement de la surface de l'anode (3), lequel second emplacement est mobile par rapport au premier emplacement.

10. Dispositif (1) selon l'une des revendications précédentes,
**caractérisé en ce que** l'anode (3) est fabriquée en un matériau appartenant à un groupe comprenant laine d'acier, polymères électriquement conducteurs, textiles électriquement conducteurs et copeaux.

11. Dispositif (1) selon l'une des revendications précédentes,
**caractérisé en ce que** la source de tension (2) est protégée du contact avec des plans extérieurs dans toutes les directions spatiales par un rembourrage.

12. Dispositif (1) selon la revendication 11, **caractérisé en ce que** le rembourrage comprend l'anode (3) et l'enveloppe (6).

13. Dispositif (1) selon l'une des revendications précédentes,
**caractérisé en ce qu'**il présente un générateur.

14. Dispositif (1) selon l'une des revendications précédentes,
**caractérisé en ce qu'**il présente un capteur permettant la mesure de conductivité, pH, température, accélération ou son.

15. Utilisation d'un dispositif (1) selon la revendication 1 pour l'activation d'une espèce médiatrice pendant un processus de lavage dans le tambour de lavage d'un lave-linge.

16. Procédé permettant l'activation d'une espèce médiatrice pendant le fonctionnement d'un lave-linge, comprenant
• l'insertion d'un dispositif (1) selon la revendication 1 dans un tambour de lavage du lave-linge, de sorte que le dispositif (1) entre en contact avec le bain de lavage pendant le fonctionnement du lave-linge,
• la mise à disposition de l'espèce médiatrice dans le bain de lavage,
• le fonctionnement du dispositif (1) et du lave-linge.
